(19) Europäisches Patentamt
European Patent Office
Office européen des brevets

(11) Veröffentlichungsnummer : **0 198 350**
**B1**

# (12) EUROPÄISCHE PATENTSCHRIFT

(45) Veröffentlichungstag der Patentschrift : **30.11.88**

(51) Int. Cl.$^4$ : **C 09 B 62/513**, C 09 B 62/09, D 06 P 1/38

(21) Anmeldenummer : **86104585.4**

(22) Anmeldetag : **04.04.86**

(54) **Disazoreaktivfarbstoffe.**

(30) Priorität : **13.04.85 DE 3513260**

(43) Veröffentlichungstag der Anmeldung : **22.10.86 Patentblatt 86/43**

(45) Bekanntmachung des Hinweises auf die Patenterteilung : **30.11.88 Patentblatt 88/48**

(84) Benannte Vertragsstaaten : **CH DE FR GB LI**

(56) Entgegenhaltungen :
**EP-A- 0 040 790**
**EP-A- 0 040 806**
**EP-A- 0 122 881**
**DE-A- 3 113 473**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Jäger, Horst, Dr.**
**Carl-Rumpff-Strasse 37**
**D-5090 Leverkusen (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 198 350 B1

**Beschreibung**

Gegenstand der Erfindung sind Disazoreaktivfarbstoffe der Formel

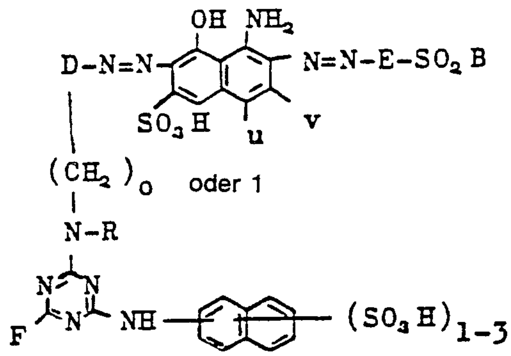

(1)

worin bedeuten

D = Rest einer Diazokomponente der Benzol- oder Naphthalinreihe,

E = Rest einer Diazokomponente der Benzol- oder Naphthalinreihe,

B = $CH = CH_2$ oder $CH_2CH_2Z$, worin Z = abspaltbare Gruppe

R = H oder $CH_3$

u, v = H oder $SO_3H$, wobei u $\neq$ v.

Die Reste D und E können die bei Azofarbstoffen üblichen Substituenten enthalten. Als diesbezügliche Substituenten sind z. B. folgende zu nennen :

Alkylgruppen mit 1 bis 4 Kohlenstoffatomen, wie Methyl, Ethyl, Propyl, Isopropyl und Butyl, Alkoxygruppen mit 1 bis 4 Kohlenstoffatomen, wie Methoxy, Ethoxy, Propyloxy, Isopropyloxy und Butyloxy, Acylaminogruppen mit 1 bis 6 Kohlenstoffatomen, wie Acetylamino, Propionylamino und Benzoylamino, Carbamoyl, Sulfamoyl, Ureido- ; Hydroxy- und Carboxygruppe, Halogen, wie Fluor, Chlor und Brom, und die Sulfonsäuregruppe.

Beispiele für abspaltbare Gruppen Z sind : $OSO_3H$, $S_2O_3H$, $OPO_3H_2$, Cl,

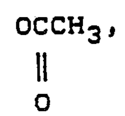

Br.

Im Rahmen der Formel (1) sind folgende Farbstoffe bevorzugt :

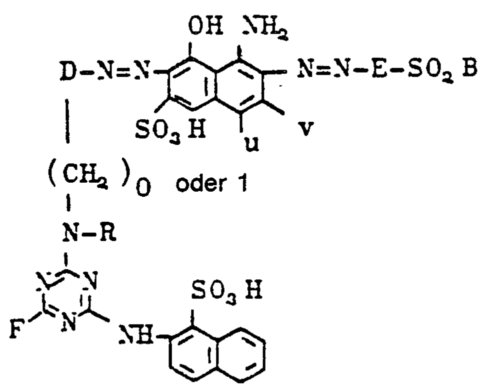

(2)

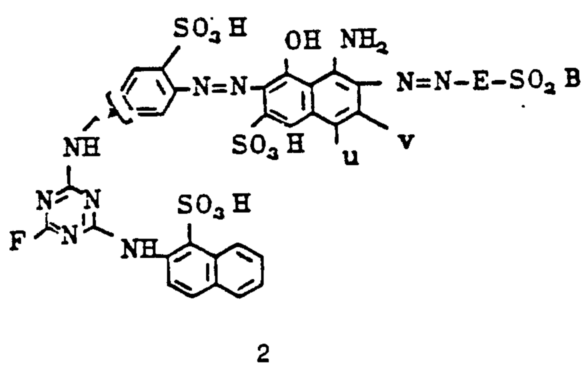

(3)

Weiterhin bevorzugt sind solche der Formel (1), (2) und (3), in denen
u = H und v = $SO_3H$

E = 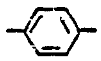 , 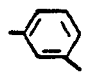 oder 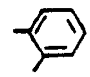

B = $CH_2CH_2OSO_3H$
und solche der Formel (3), in denen die Triazinylaminogruppe m-ständig zur Azogruppe ist.

Die Verbindungen der Formel (1) werden beispielsweise wie folgt hergestellt :

1. Ein Amin der Formel

$H_2N—E—SO_2B$ (4)

wird diazotiert, mit einer 8-amino-1-hydroxynaphthalin-sulfonsäure der Formel

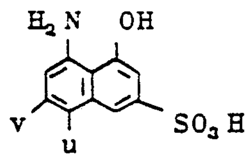

(5)

zu einer Verbindung der Formel

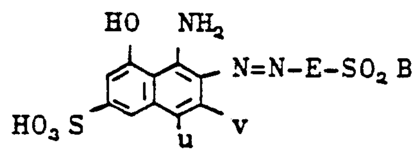

(6)

in saurem Medium gekuppelt, und diese Azoverbindung wird mit der aus einem Diamin der Formel

$H_2N-D-(CH_2)_{0-1}-NH(R)$ (7)

hergestellten Diazoniumverbindung

$H-N(R)-(CH_2)_{0-1}-D-N{\equiv}N^{\oplus}$ .

$X^{\ominus}$ (anionischer Rest)
in neutralem Medium zur Disazoverbindung der Formel

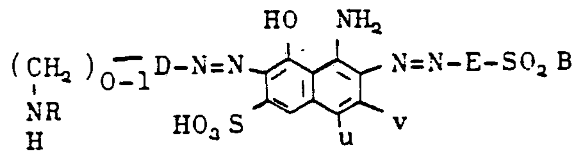

(8)

gekuppelt und diese mit einer Difluortriazinverbindung der Formel

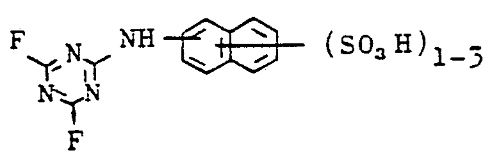

(9)

(F = Fluor)
unter Abspaltung von Fluorwasserstoffsäure kondensiert.

2. Ein Diamin der Formel (7) wird mit einer Difluortriazinverbindung der Formel (9) zu einem Amin der Formel

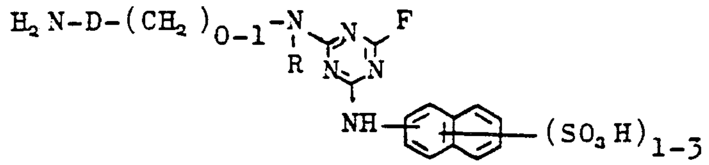

(10)

kondensiert, das diazotiert und im neutralen Medium mit einer Kupplungskomponente der Formel (6) zu einem Farbstoff der Formel (1) gekuppelt wird.

Die Herstellung der erfindungsgemäßen Farbstoffe und Farbstoffzwischenprodukte erfolgt vorzugsweise im wäßrigem Medium.

Die Umsetzungen mit den fluorhaltigen Triazinen erfolgen bei schwach saurem bis schwach alkalischem pH-Wert. Die bei der Kondensation freiwerdende Fluorwasserstoffsäure wird vorzugsweise durch Zugabe von verdünnter Alkalihydroxid- bzw. -carbonat- oder -bicarbonat-Lösung neutralisiert, wie NaOH, $Na_2CO_3$, LiOH, $Li_2CO_3$ u. a.

Als Ausgangsverbindungen zur Herstellung der Reaktivfarbstoffe der Formel (1) können beispielsweise genannt werden :

a) Kupplungskomponenten der Formel (5)

1-Amino-8-hydroxynaphthalin-3,6-disulfonsäure (H-Säure),
1-Amino-8-hydroxynaphthalin-4,6-disulfonsäure (K-Säure).

b) Diazokomponenten der Formel (4)

Anilin-4-β-sulfatoethylsulfon, Anilin-3-β-sulfatoethylsulfon, Anilin-2-β-sulfatoethylsulfon, Anilin-4-β-thiosulfatoethylsulfon, Anilin-3-β-thiosulfatoethylsulfon, Anilin-2-β-thiosulfatoethylsulfon, Anilin-4-β-phosphatoethylsulfon, 4-Methoxyanilin-3-β-sulfatoethylsulfon, 4-Methoxy-anilin-3-β-vinylsulfon, 2,5-Dimethoxy-anilin-4-β-sulfatoethylsulfon, 2,5-Dimethoxy-anilin-4-vinylsulfon, 2,5-Dimethoxy-anilin-4-β-sulfatoethylsulfon, 2-Methoxy-5-methyl-anilin-4-β-sulfatoethylsulfon, 2-Methoxy-5-methyl-anilin-4-β-vinylsulfon, 6-Carboxy-anilin-3-β-sulfatoethylsulfon, 6-Carboxy-anilin-3-vinylsulfon, 2-Sulfo-anilin-4-β-sulfatoethylsulfon, 2-Sulfoanilin-4-vinylsulfon, 2,4-Disulfoanilin-5-vinylsulfon, 2-Hydroxy-anilin-5-β-sulfatoethylsulfon, 2-Hydroxy-anilin-4-β-sulfatoethylsulfon, 3-Sulfo-2-hydroxy-anilin-5-β-sulfatoethylsulfon, 2-Naphthylamin-8-β-sulfatoethylsulfon, 2-Naphthylamin-6-β-sulfatoethylsulfon, 1-Sulfo-2-naphthylamin-6-β-sulfatoethylsulfon, 6-Sulfo-2-naphthylamin-8-β-sulfatoethylsulfon, 2-Aminonaphthalin-6,8-di-(sulfatoethylsulfon), 2-Brom-1-aminobenzol-4-β-sulfatoethylsulfon, 2,6-Dichlor-1-aminobenzol-4-β-sulfatoethylsulfon.

c) Diazokomponenten der Formel (7)

1,3- und 1,4-Diaminobenzol, 1,3- und 1,4-Diaminoanisol, 1,3- und 1,4-Diaminotoluol, 1,3-Diamino-4-chlorbenzol, 1,3-Diamino-4-ethylbenzol, 1,3-Diamino-4-ethoxybenzol, 1,3-Diaminobenzol-4-sulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4,6-disulfonsäure, 2-Amino-5-aminomethylnaphthalin-sulfonsäure-1, 2-Amino-5-aminomethylnaphthalin-disulfonsäure-1,7, 1-Amino-5-methylaminomethylbenzol-sulfonsäure-2, 1-Amino-3-aminomethyl-4-methoxy-benzol-sulfonsäure-2, 1-Amino-3-N-methylaminomethylbenzol, 1-Amino-4-methylaminomethylbenzol.

d) Difluortriazine der Formel (9)

2,4-Difluor-6-(1′-sulfo-naphthyl-2′-amino)-triazin, 2,4-Difluor-6-(1′,5′-disulfonaphthyl-2′-amino)-triazin, 2,4-Difluor-6-(3′,6′-disulfonaphthyl-2′-amino)-triazin, 2,4-Difluor-6-(3′,6′,8′-trisulfonaphthyl-2′-amino)-triazin, 2,4-Difluor-6-(4′,6′-disulfonaphthyl-1′-amino)-triazin, 2,4-Difluor-6-(4′-sulfonaphthyl-1′-amino)-triazin.

Die Reaktivfarbstoffe der Formel (1) können isoliert und zu trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls nach Zugabe von Coupagemitteln und/oder Puffermitteln, z. B. nach Zugabe eines Gemisches gleicher Teile Mono- und Dinatriumphosphat, getrocknet werden ; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemäßen trockenen Präparate direkt, d. h. ohne Zwischenisolierung der Farbstoffe herstellen.

Die Reaktivfarbstoffe der Formel (1) zeichnen sich durch hohe Reaktivität aus, und sie ergeben Färbungen mit guten Naß- und Lichtechtheiten. Besonders hervorzuheben ist es, daß die Farbstoffe eine gute Löslichkeit und Elektrolytlöslichkeit bei guten auszieheigenschaften und hoher Farbstoff-Fixierung aufweisen, und daß sich die nicht fixierten Anteile leicht entfernen lassen. Die Färbungen sind ätzbar.

Die neuen Farbstoffe der Formel (1) eignen sich zum Färben und Bedrucken von Hydroxyl- oder Amidgruppen enthaltenden Materialien, wie Textilfasern-, Fäden und Geweben aus Wolle, Seide, synthetischen Polyamid-, und Polyurethanfasern und zum waschechten Färben und Bedrucken von nativer oder regenerierter Cellulose, wobei die Behandlung von Cellulosematerialien zweckmäßigerweise in Gegenwart säurebindender Mittel und gegebenenfalls durch Hitzeeinwirkung nach den für Reaktivfarbstoffe bekanntgewordenen Verfahren erfolgt.

Die angegebenen Formeln sind die der entsprechenden freien Säuren. Die Farbstoffe wurden im allgemeinen in Form der Alkalisalze, insbesondere der Na-Salze isoliert und zum Färben eingesetzt.

Die in den Beispielen genannten Gewichtsteile beziehen sich auf die freie Säure. Die in den Beispielen angegebene Farbkennzahl beziehen sich auf Colour Index Hue Indication Chart (Indicator Numbers).

In der EP-A 0 122 881 werden Monoazofarbstoffe mit benzolischer Diazokomponente beschrieben, welche in der Diazokomponente einen Sulfonaphthylaminofluortriazinylrest enthalten und als Kupplungskomponente eine Naphtholsulfosäure oder eine N-acylierte Aminonaphtholsulfosäure enthalten.

In der EP-A 0 040 806 werden ganz generell organische Farbstoffe beschrieben, welche einen Fluortriazinyl-Reaktivrest und einen Reaktivrest-$SO_2X$ (X = Vinyl, β-Thiosulfatoethyl, β-Sulfatoethyl oder β-Chlorethyl) aufweisen. Als Disazofarbstoffe mit 1-Hydroxy-8-amino-3,6-disulfonaphthylen-Mittelstück werden dabei nur solche erwähnt, die am Fluortriazinring einen Aminobenzol-Rest enthalten.

Beispiel 1

Zu 61,1 g des in 500 ml Wasser gelösten Farbstoffs der Formel :

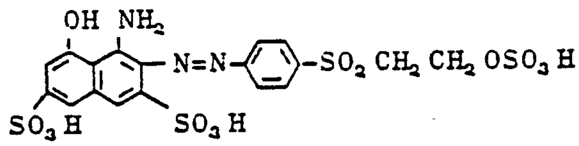

(hergestellt durch saure Kupplung von diazotiertem 4-Amino-phenyl-β-sulfatoethylsulfon auf H-Säure) wird bei pH 6-7 und 10-15 °C eine Mischung aus 50,6 g diazotiertem 2-Fluor-4-(1″-sulfo-naphth-2″-yl-amino)-6-(4′-sulfo-3′-amino-phenyl-amino)-triazin (hergestellt nach den Angaben des Beispiels 1 der EP-A 122 881) in 600 ml Wasser gegeben. Nach beendeter Kupplungsreaktion wird ausgesalzen und abgesaugt. Nach dem Trocknen und Mahlen fällt der Farbstoff der Formel

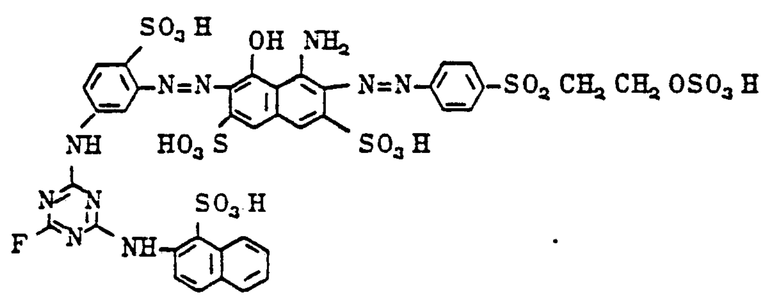

als dunkles Pulver an, das sich in Wasser mit blauer Farbe löst und Baumwolle in marineblauen (28) bis schwarzen Tönen färbt.

Der Farbstoff kann auch durch Sprühtrocknung oder Gefriertrocknung bei pH 7 isoliert werden.

Weitere wertvolle Reaktivfarbstoffe, die Baumwolle in den angegebenen Farbtönen färben, werden erhalten, wenn man gemäß den Angaben in Beispiel 1 die in Spalte 2 angegebene diazotierte Diazokomponente sauer auf die in Spalte 3 angegebene Kupplungskomponente kuppelt und auf die so erhaltene Monoazoverbindung die in Spalte 4 angegebene diazotierte Diazokomponente kuppelt.

(Siehe Tabellen Seite 6 ff.)

| Beispiel | | | | |
|---|---|---|---|---|
| 2 | Anilin-3-β-sulfatoethylsulfon | H-Säure | 2-Fluor-4-(1'-sulfo-naphthyl-2'-amino)-6-(3"-amino-4"-sulfo-phenylamino)-triazin | marineblau 28 |
| 3 | Anilin-2-β-sulfatoethylsulfon | " | " | " |
| 4 | Anilin-4-β-thio-sulfatoethylsulfon | " | " | " |
| 5 | Anilin-4-vinylsulfon | " | " | " |
| 6 | 2-Aminonaphthalin-6-β-sulfatoethylsulfon | " | " | " |
| 7 | 2-Chlor-anilin-4-β-sulfatoethylsulfon | " | " | " |
| 8 | 2-Methyl-5-methoxyanilin-4-β-sulfatoethylsulfon | " | " | " |
| 9 | 2,5-Dimethoxy-anilin-4-β-sulfatoethylsulfon | " | 2-Fluor-4-(1'-sulfo-naphth-2'-yl-amino)-6-(3"-amino-4"-sulfo-phenylamino)-triazin | " |
| 10 | Anilin-4-β-sulfato-ethylsulfon | K-Säure | " | rotstichig marineblau 38 |
| 11 | " | H-Säure | 2-Fluor-4-(1'-sulfo-naphth-2'-yl-amino)-6-(4"-amino-3"-sulfo-phenylamino)-triazin | grünstichig marineblau 39 |

(Fortsetzung)

| | | | | |
|---|---|---|---|---|
| 12 | " | " | 2-Fluor-4-(1',5'-disulfo-naphth-2'-yl-amino)-6-(3"-amino-4"-sulfo-phenylamino)-triazin | marineblau 28 |
| 13 | Anilin-2-β-sulfato-ethylsulfon | H-Säure | 2-Fluor-4-(1',5'-disulfo-naphth-2'-yl-amino)-6-(3"-amino-4"-sulfo-phenylamino)-triazin | marineblau 28 |
| 14 | " | " | 2-Fluor-4-(1'-sulfo-naphth-2'-yl-amino)-6-(4"-amino-2",5"-disulfo-phenylamino)-triazin | grünstichig marineblau 39 |
| 15 | Anilin-4-β-sulfato-ethylsulfon | " | " | " |
| 16 | " | " | 2-Fluor-4-(3',6'-disulfo-naphth-2'-yl-amino)-6-(3"-amino-4"-sulfo-phenylamino)-triazin | marineblau 28 |

Beispiel 17

87,4 g des Farbstoffes der Formel

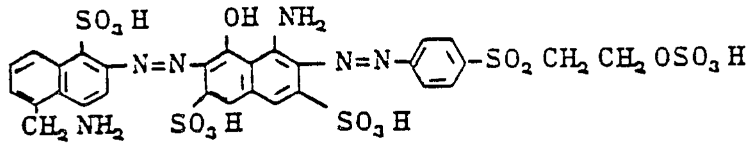

werden in 1 000 ml Wasser angerührt. Man kühlt auf 5 °C ab und versetzt mit einer eiskalten Lösung 32,5 g 2,4-Difluor-6-(1'-sulfo-naphth-2'-yl-amino)-triazin in 500 ml Wasser. Man hält durch gleichzeitige Zugabe von 10 %iger Natronlauge den pH zwischen 8,0 und 8,5. Nach beendeter Kondensation wird der Farbstoff ausgesalzen, abgesaugt, getrocknet und gemahlen. Man erhält ein dunkles Pulver, das sich leicht in Wasser mit blauer Farbe löst und Baumwolle in grünstichig marineblauen (39) bis schwarzen Tönen färbt. Der Farbstoff entspricht der Formel

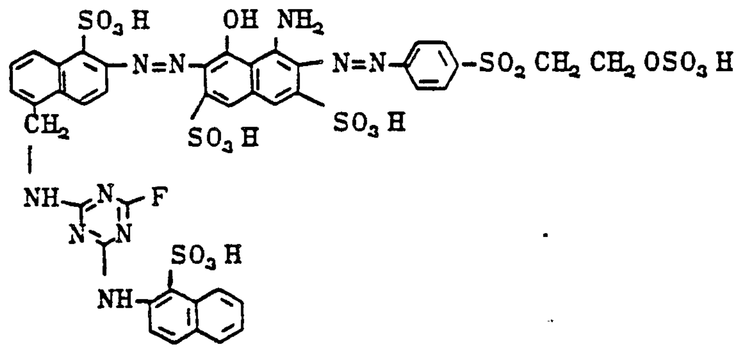

Das Kondensationsprodukt aus Trifluortriazin und 2-Aminonaphthalin-1-sulfonsäure erhält man nach den Angaben von Beispiel 1 des EP-A 122 881.

Weitere wertvolle Reaktivfarbstoffe, die Baumwolle in den in Spalte 4 angegeenen Tönen färben, werden erhalten, wenn man gemäß den Angaben in Beispiel 17 die in Spalte 2 aufgeführten Disazofarbstoffe mit den in Spalte 3 genannten Difluortriazinverbindungen kondensiert.

(Siehe Tabellen Seite 9 ff.)

| Beispiel | | | |
|---|---|---|---|
| 18 | 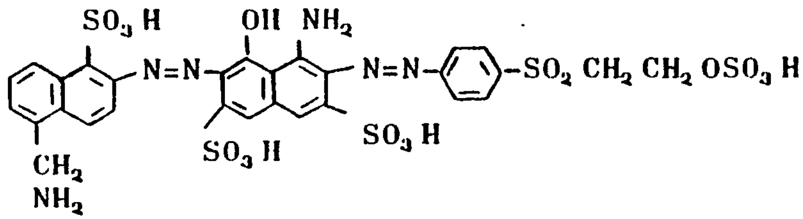 | 2,4-Difluor-6-(1',5'-disulfo-naphth-2'-yl-amino)-triazin | grünstichig marineblau |
| 19 | 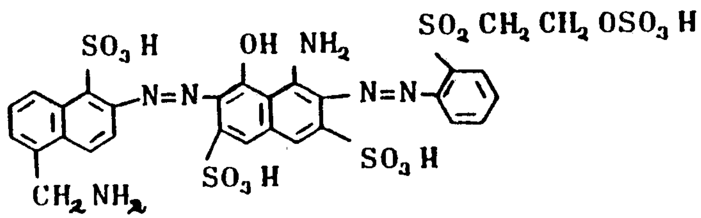 | 2,4-Difluor-6-(3',6'-disulfo-naphth-2'-yl-amino)-triazin | " |
| 20 | " | " | " |
| 21 | " | 2,4-Difluor-6-(1'-sulfo-naphth-2'-yl-amino)-triazin | " |
| 22 | " | 2,4-Difluor-6-(1',5'-disulfo-naphth-2'-yl-amino)-triazin | " |

(Fortsetzung)

| | | | |
|---|---|---|---|
| 23 | 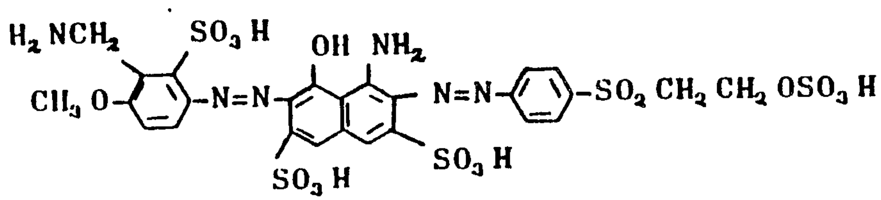 | 2,4-Difluor-6-(1'-sulfo-naphth-2'-yl-amino)-triazin | " |
| 24 | " | 2,4-Difluor-6-(1',5-disulfo-naphth-2'-yl-amino)-triazin | " |
| 25 | 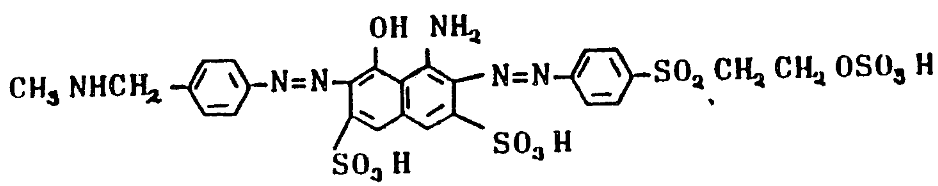 | " | marineblau 28 |

**Patentansprüche**

1. Disazoreaktivfarbstoffe der Formel

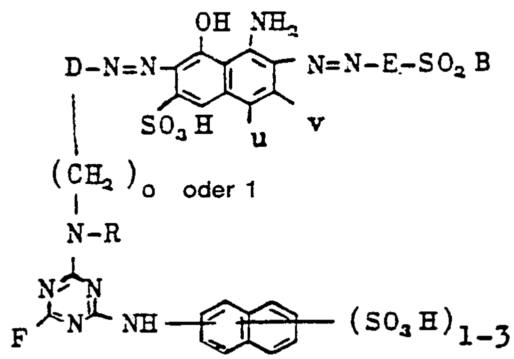

worin bedeuten

D = Rest einer Diazokomponente der Benzol- oder Naphthalinreihe,
E = Rest einer Diazokomponente der Benzol- oder Naphthalinreihe,
B = CH = $CH_2$ oder $CH_2CH_2Z$, worin Z = abspaltbare Gruppe
R = H oder $CH_3$
u, v = H oder $SO_3H$, wobei u $\neq$ v.

2. Farbstoffe des Anspruchs 1 der Formel

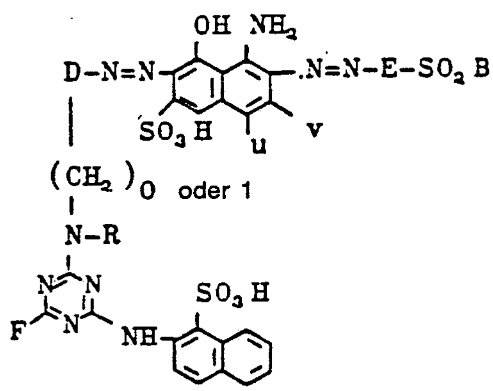

3. Farbstoffe des Anspruchs 1 der Formel

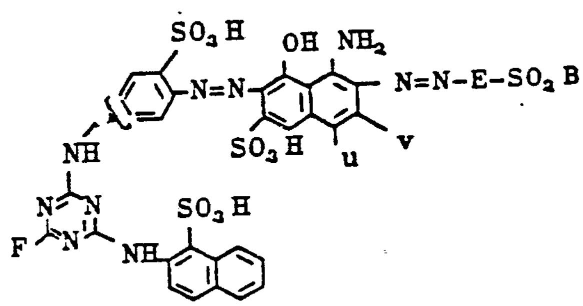

4. Farbstoffe der Ansprüche 1 bis 3 mit
u = H und v = $SO_3H$

E = 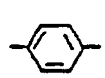 , 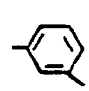 oder 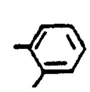 und

B = $CH_2CH_2OSO_3H$.

5. Verwendung der Farbstoffe der Ansprüche 1 bis 4, zum Färben und Bedrucken von Hydroxylgruppen oder Amidgruppen aufweisenden Materialien.

6. Mit den Farbstoffen der Ansprüche 1 bis 4 gefärbte oder bedruckte Hydroxylgruppen oder Amidgruppen aufweisende Materialien.

**Claims**

1. Reactive disazo dyestuffs of the formula

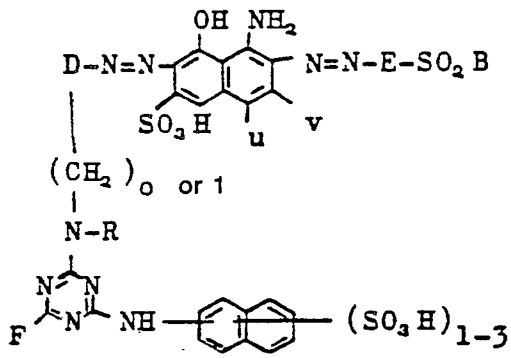

wherein

D denotes the radical of a diazo component from the benzene or naphthalene series,
E denotes the radical of a diazo component from the benzene or naphthalene series,
B denotes $CH = CH_2$ or $CH_2CH_2Z$, wherein Z denotes a group which can be eliminated,
R denotes H or $CH_3$
u and v denote H or $SO_3H$, with $u \neq v$.

2. Dyestuffs of Claim 1, of the formula

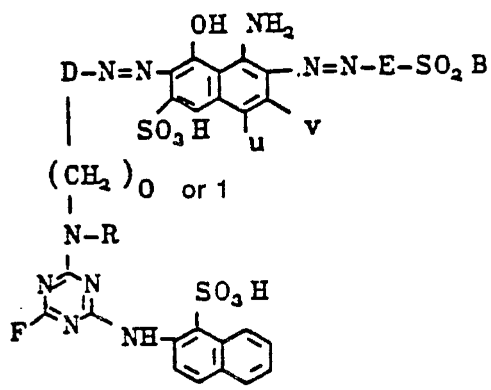

3. Dyestuffs of Claim 1, of the formula

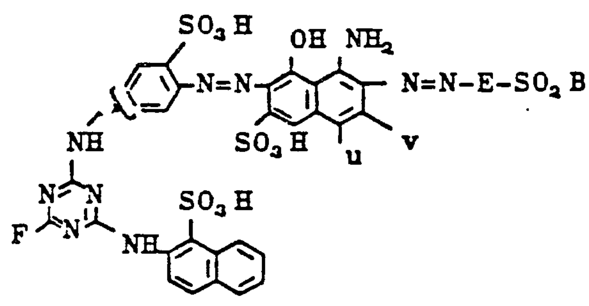

4. Dyestuffs of Claims 1 to 3 with
u = H and v = $SO_3H$

E = 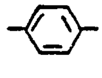 , 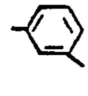 or 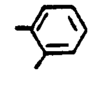 and

B = $CH_2CH_2OSO_3H$.

5. Use of the dyestuffs of Claims 1 to 4 for the dyeing and printing of materials containing hydroxyl groups or amide groups.

6. Materials, containing hydroxyl groups or amide groups, which have been dyed or printed with the dyestuffs of Claims 1 to 4.

**Revendications**

1. Colorants réactifs disazoïques de formule

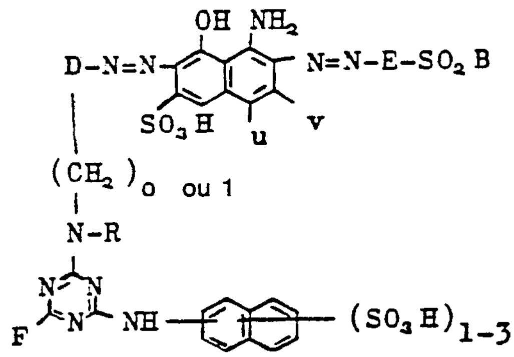

dans laquelle

D représente le radical d'un composant diazotable de la série benzénique ou naphtalénique,
E représente le radical d'un composant diazotable de la série benzénique ou naphtalénique,
B représente $CH = CH_2$ ou $CH_2CH_2Z$ dans lequel Z représente un groupe éliminable,
R représente H ou $CH_3$,
u et v représentent H ou $SO_3H$, u étant différent de v.

2. Colorants de la revendication 1, de formule

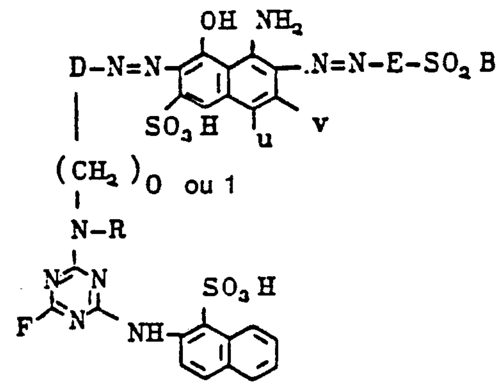

3. Colorants de la revendication 1, de formule

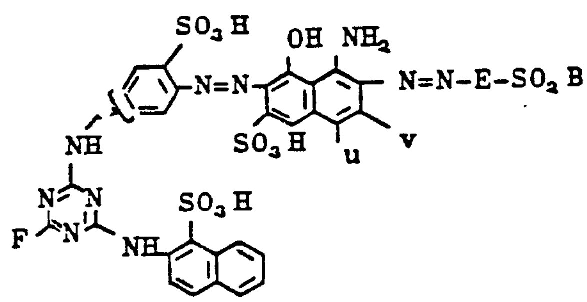

4. Colorants des revendications 1 à 3, dans lesquels u = H et v = $SO_3H$

E = 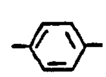 , 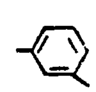 ou 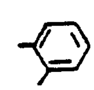 et

B = $CH_2CH_2OSO_3H$.

5. Utilisation des colorants des revendications 1 à 4 pour la teinture et l'impression de matières contenant des groupes hydroxy ou des groupes amide.

6. Matières contenant des groupes hydroxy ou des groupes amide, teintes ou imprimées à l'aide des colorants des revendications 1 à 4.